(19) Europäisches Patentamt / European Patent Office / Office européen des brevets

(11) **EP 2 130 601 A2**

(12) **EUROPEAN PATENT APPLICATION**

(43) Date of publication:
09.12.2009 Bulletin 2009/50

(51) Int Cl.:
*B01J 35/04* (2006.01)  *B01J 29/00* (2006.01)
*B01D 53/92* (2006.01)  *F01N 3/00* (2006.01)

(21) Application number: 09000508.3

(22) Date of filing: 15.01.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 20.05.2008 PCT/JP2008/059259

(71) Applicant: IBIDEN CO., LTD.
Ogaki-shi
Gifu 503-8604 (JP)

(72) Inventors:
• Kunieda, Masafumi
  Ibi-gun, Gifu 501-0695 (JP)
• Goto, Shinnosuke
  Ibi-gun, Gifu 501-0695 (JP)
• Yoshimura, Ken
  Ibi-gun, Gifu 501-0695 (JP)

(74) Representative: HOFFMANN EITLE
Patent- und Rechtsanwälte
Arabellastrasse 4
81925 München (DE)

(54) **Honeycomb structure**

(57) A honeycomb structure (1) is disclosed that includes a honeycomb unit (2) having a shape in which plural cells (3) extend along the longitudinal direction from one end face of the honeycomb unit (2) to the another end face, the cells (3) being separated from each other by cell walls (4). The honeycomb unit (2) includes zeolite; inorganic particles; and inorganic binder. The honeycomb unit (2) is **characterized in that** a hydroxyl group content in the inorganic particles is greater than a hydroxyl group content in the zeolite.

# FIG.1A

EP 2 130 601 A2

**Description**

BACKGROUND OF THE INVENTION

1. Field of the Invention

The present invention relates to a honeycomb structure.

2. Description of the Related Art

Conventionally, there have been developed many techniques to convert exhaust gas from vehicles. For practical use, unfortunately, it may be difficult to argue that sufficient measure have been taken against exhaust gas from vehicles. There is a trend not only in Japan but also in the entire world that regulation of exhaust gas from vehicles is becoming more and more strict. In particular, regulation for NOx emission as exhaust gas from diesel engines has been extremely aggressive. Conventionally, NOx emission has been reduced by using a method of controlling the combustion system of engines, but such a method alone cannot satisfy the current NOx regulations. To overcome the problem, an NOx conversion system (called an SCR system) using ammonia as a reducing agent has been proposed as a diesel NOx conversion system. As a catalyst carrier being used in such systems, a honeycomb structure as disclosed in Patent Document 1 has been widely known. Patent Document 1: International Publication No.: WO2005/063653

In a honeycomb structure as disclosed in Patent Document 1, when a honeycomb unit is formed by molding and firing using zeolite as a major raw material, the strength of the honeycomb unit is largely reduced. Because of this drawback, there arises a problem that a honeycomb structure formed of the honeycomb unit can hardly serve as a honeycomb structure to be used as an NOx conversion catalyst for exhaust gas from diesel engines.

SUMMARY OF THE INVENTION

According to an aspect of the present invention, a honeycomb structure has sufficient strength upon the honeycomb structure being mounted in a vehicle and is capable of effectively converting NOx in exhaust gas.

Further according to an aspect of the present invention, a honeycomb structure (1) includes a honeycomb unit (2) having a shape in which plural cells (3) extend along the longitudinal direction from one end face of the honeycomb unit (2) to the another end face, the cells (3) being separated from each other by cell walls (4). The honeycomb unit (2) includes zeolite, inorganic particles, and inorganic binder. The honeycomb unit (2) is characterized by that a hydroxyl group content in the inorganic particles is greater than a hydroxyl group content in the zeolite.

In the present description, unless otherwise described, the term inorganic particles refers to "inorganic particles other than zeolite".

According to an aspect of the present invention, the honeycomb unit of the honeycomb structure includes zeolite serving as NOx conversion catalyst, therefore, the honeycomb structure may be used as an NOx conversion catalyst for exhaust gas. Further, the honeycomb unit of the honeycomb structure according to an embodiment of the present invention includes inorganic particles other than zeolite, and a hydroxyl group content in raw-material inorganic particles before being fired is greater than a hydroxyl group content in raw-material zeolite. Because of this feature, when the zeolite, the inorganic particles, and inorganic binder are mixed as raw material to form a honeycomb unit and the honeycomb unit is fired, the hydroxyl groups in the inorganic particles form a robust bonded body by performing a dehydration condensation reaction, and as a result, a honeycomb unit having high strength may be formed. Herein, the hydroxyl group content in the inorganic particles and the hydroxyl group content in the zeolite refer to the hydroxyl group content in the raw-material inorganic particles and the hydroxyl group content in the raw-material zeolite before being fired to form the honeycomb unit.

In a preferred aspect of the present invention, the hydroxyl group content in the inorganic particles per unit volume is 2.5 times or more higher than the hydroxyl group content in the zeolite per unit volume.

In a preferred aspect of the present invention, the inorganic particles include at least one compound of alumina, silica, titania, zirconia, ceria, mullite, and a precursor of one of the compounds.

In a preferred aspect of the present invention, the honeycomb unit (2) further comprising: inorganic fibers.

In a preferred aspect of the present invention, the inorganic fibers includes at least one of alumina fibers, silica fibers, silicon carbide fibers, silica-alumina fibers, glass fibers, potassium titanate fibers, and aluminum borate fibers.

In a preferred aspect of the present invention, the inorganic binder includes at least one of alumina sol, silica sol, titania sol, water glass, sepiolite, and attapulgite. Herein, as inorganic binder, a name of inorganic binder as a raw material before being fired as the honeycomb unit is used.

In a preferred aspect of the present invention, the zeolite includes secondary particles, and the average particle diameter of the secondary particles of the zeolite is in a range from 0.5 $\mu$m to 10 $\mu$m. Herein, the average particle diameter of the secondary particles of zeolite refers to the average particle diameter of the raw-material particles before being fired as the honeycomb unit.

In a preferred aspect of the present invention, an average particle diameter of secondary particles of the inorganic particles is equal to or less than an average particle diameter of the zeolite. Herein, the average particle diameter of the secondary particles of the inorganic particles and zeolite refers to the average particle diameter of the secondary particles of the inorganic particles and zeolite before being fired as the honeycomb unit.

In a preferred aspect of the present invention, a content of the zeolite is in a range from 40 mass% to 80 mass%.

In a preferred aspect of the present invention, a content of the inorganic particles is in a range from 3 mass% to 30 mass%.

In a preferred aspect of the present invention, the zeolite is ion-exchanged by at least one of metal species selected from the group consisting of Cu, Fe, Ni, Zn, Mn, Co, Ag, and V.

In a preferred aspect of the present invention, a catalyst component is supported on the cell walls.

In a preferred aspect of the present invention, the catalyst component includes at least one of noble metal, an alkali-metal compound, and alkali-earth metal compound.

In a preferred aspect of the present invention, plural honeycomb units are bonded to each other by interposing adhesive material.

According to an aspect of the present invention, a honeycomb structure has sufficient strength upon being mounted in a vehicle and is capable of effectively converting NOx in exhaust gas.

BRIEF DESCRIPTION OF THE DRAWINGS

Other objects, features, and advantages of the present invention will become more apparent from the following description when read in conjunction with the accompanying drawings, in which:

FIG. 1A is a perspective view showing a honeycomb structure according to an embodiment of the present invention, the honeycomb structure including plural honeycomb units;

FIG. 1B is a perspective view showing a honeycomb structure according to an embodiment of the present invention, the honeycomb structure including a single honeycomb unit; and

FIG. 2 is a perspective view showing a honeycomb unit to be used to constitute the honeycomb structure in FIG. 1A.

BEST MODE FOR CARRYING OUT THE INVENTION

In the honeycomb structure disclosed in Patent Document 1, as a result of research for the reason why the strength of a honeycomb unit is reduced when zeolite is used as a major raw material of the honeycomb unit, the present inventors have made an assumption that bonding of zeolite particles due to hydration upon being fired (sintered) may not be sufficiently proceeded. Namely, it has been generally thought that the structural strength of a honeycomb unit may be increased as a result of a bonding between zeolite particles used as a major raw material and a dehydration bonding between zeolite particles and inorganic binder or inorganic fibers when a molded body of the honeycomb unit is fired (sintered). However, unfortunately, the zeolite particles do not include sufficient hydroxyl group content, and therefore, a sufficient amount of dehydration bonding may not be induced. To overcome this situation, as a supplemental raw material, inorganic particles having more hydroxyl group content than the zeolite particles have are added when the honeycomb structure is formed, and influence of the hydroxyl group content is studied. As a result, the present inventors have found that the inorganic particles having a large amount of hydroxyl groups may contribute to the improvement of the structural strength of the honeycomb unit and completed the present invention.

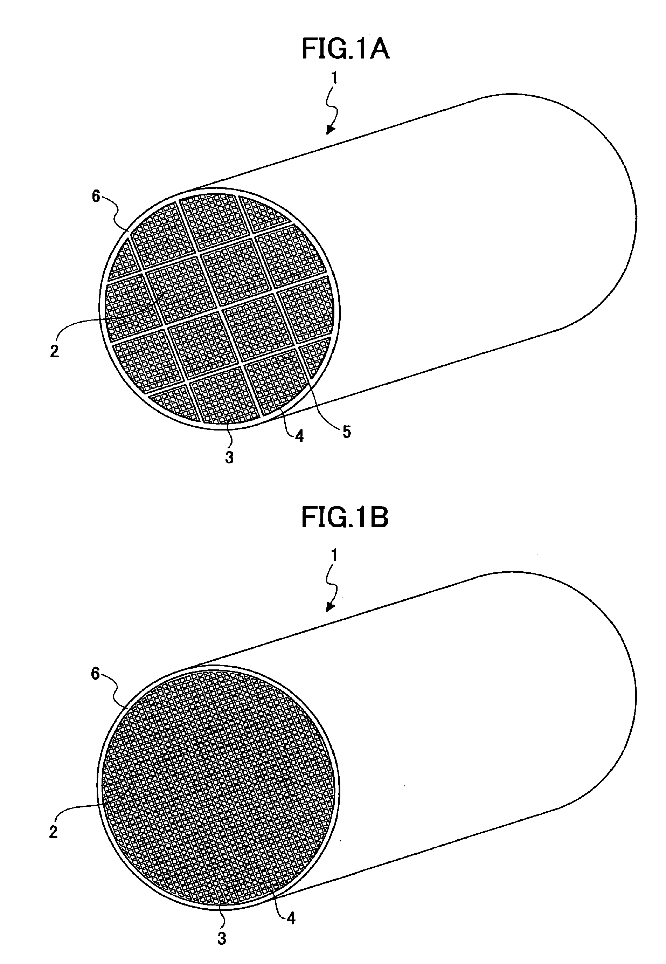

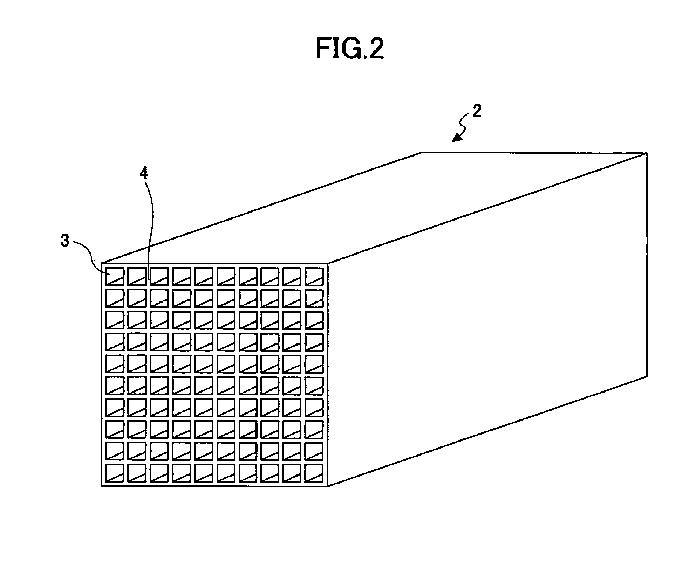

A honeycomb structure according to an embodiment of the present invention includes a honeycomb unit which is a fired body (sintered body) in which plural cells extend from one end face to the another end face along the longitudinal direction of the honeycomb structure and these cells are separated from each other by interposing cell walls. FIG. 1A perspectively shows an example of the honeycomb structure according to an embodiment of the present invention. As shown in FIG. 1A, the honeycomb structure 1 is formed by joining plural honeycomb units 2 to each other by an adhesive material 5 so that cells 3 formed in the honeycomb units 2 are arranged substantially in parallel with each other. FIG. 1B perspectively shows another example of the honeycomb structure according to another embodiment of the present invention. As shown in FIG. 1B, the honeycomb structure 1 includes a single honeycomb unit 2. As shown in FIGS. 1A and 1B, the honeycomb structure 1 may include only a single honeycomb unit 2 or plural honeycomb units 2. Preferably, a side surface of the honeycomb structure 1 in FIGS. 1A and 1B is coated with a coating material layer 6 to maintain the strength of the honeycomb structure 1. The honeycomb units 2 constituting the honeycomb structure 1 as shown in FIG. 1A include plural cells 3 (through holes) extending in the longitudinal direction of the honeycomb units 2 as perspectively shown in FIG. 2 and the cell walls 4 separating the adjoining cells 3 constitute the honeycomb unit 2.

The honeycomb unit 2 includes zeolite, inorganic particles (inorganic particles other than zeolite), and inorganic binder, the inorganic particles having more hydroxyl group content than the zeolite particles have. Herein, strictly speaking, zeolite, inorganic particles, and inorganic binder refer to particles, paste, or the like in their raw material phase. However, after being fired to form a honeycomb unit, those zeolite, inorganic particles, and inorganic binder can still be distinguished from each other as the materials deriving from their original raw materials. Therefore, the terms zeolite, inorganic particles, and inorganic binder are used herein without being changed. Therefore, the hydroxyl group content of the inorganic particles and zeolite corresponds to that of inorganic particles and zeolite particles used as raw materials for forming the honeycomb unit. Further, herein, the hydroxyl group content refers to the number of hydroxyl groups per unit volume. In the following descriptions, zeolite, inorganic particles, and inorganic binder may represent the corresponding raw materials.

In the following, each composition included in the honeycomb unit and the raw materials of the compositions are described.

(Zeolite)

Zeolite is finely particulated and distributed in the honeycomb unit. Zeolite serves as an NOx conversion catalyst, therefore zeolite is an essential component as the NOx conversion catalyst for exhaust gas in the honeycomb structure according to an embodiment of the present invention. Zeolite is derived from a raw material of zeolite particles before being fired, and any kind of zeolite may be used as long as the zeolite has desired NOx conversion efficiency. Raw-material zeolite includes, for example, β-type zeolite, ZSM-5type zeolite, mordenite, faujasite, zeolite A, and zeolite L. Further, ion-exchanged zeolite may also be used. For example, zeolite may be preferably used in which at least one metal species of Cu, Fe, Ni, Zn, Mn, Co, Ag, and V is ion-exchanged. Any kind of zeolite alone or in combination thereof may be used.

Preferably, zeolite includes secondary particles and an average particle diameter of the secondary particles of zeolite is in a range from 0.5 $\mu$m to 10 $\mu$m. If the average particle diameter of the secondary particles of the zeolite is less than 0.5 $\mu$m, it is necessary to add a large amount of inorganic particles, which may cause difficulty in forming the honeycomb unit. On the other hand, if the average particle diameter of the secondary particles of the zeolite is greater than 10 $\mu$m, a supported catalyst amount per unit volume of the honeycomb unit is reduced, and the NOx conversion performance for exhaust gas is also reduced. The average particle diameter of the secondary particles of the zeolite may be measured by using zeolite particles being particulated raw material constituting the secondary particles before being fired as the honeycomb unit.

Zeolite content included in the honeycomb u nit is preferably in a range from 40 mass% to 80 mass% and more preferably in a range from 50 mass% to 70 mass%. As described above, zeolite contributes to NOx conversion, and so from this point of view, the higher zeolite content the better. However, when the zeolite content alone is increased, content of other element materials such as inorganic particles content and inorganic binder content are required to be reduced by that much, which may result in the reduction of the strength of the honeycomb unit and make it difficult to form a raw honeycomb molded body having a desired shape in a molding step of the honeycomb unit.

(Inorganic particles)

In the honeycomb structure according to an embodiment of the present invention, inorganic particles contribute to the improvement of the strength of the honeycomb unit. Herein, inorganic particles refer to the inorganic particles other than zeolite. When no inorganic particles are used except zeolite particles, in other words, when only zeolite particles and inorganic binder are used upon the honeycomb unit being formed, the strength of the formed honeycomb unit may become very weak.

In the honeycomb structure according to an embodiment of the present invention, the inorganic particles included in the honeycomb unit may be, but not limited to, any compound of alumina, silica, zirconia, titania, ceria, mullite, and a precursor of any of these compounds. As the inorganic particles, any one of the compounds and the precursors or combination thereof may be used. As the inorganic particles, alumina or zirconia may be more preferably used. As the aluminum, $\alpha$-alumina and boehmite may be preferably used.

The inorganic particles used for the honeycomb unit of the honeycomb structure according to an embodiment of the present invention include hydroxyl groups in a step when the inorganic particles are still raw-material inorganic particles before being fired. Like a majority of inorganic compound particles that can be used for industrial purposes, the raw-material inorganic particles and the raw-material zeolite particles before being fired used for forming the honeycomb unit of the honeycomb structure according to an embodiment of the present invention include hydroxyl groups. The hydroxyl group has a tendency to reinforce the bonding between particles by performing a dehydration condensation reaction in a step when the honeycomb unit is formed. In particular, such raw-material inorganic particles such as alumina particles are likely to firmly bond with each other by the dehydration condensation reaction in a step of being fired.

In the honeycomb unit of the honeycomb structure according to an embodiment of the present invention, a hydroxyl group content in the raw-material inorganic particles is higher than that in the raw-material zeolite particles. A ratio of the hydroxyl group content in the raw-material inorganic particles to the hydroxyl group content in the raw-material inorganic particles is preferably equal to or greater than 2.5, more preferably equal to or greater than 5. In this embodiment of the present invention, the bonding between the inorganic particles contributes to the improvement of the strength of the honeycomb unit. Therefore, by making the hydroxyl group content in the raw-material inorganic particles higher than that in the raw-material zeolite particles, it may become easier for the hydroxyl groups to be bonded with each other by performing the dehydration condensation reaction in a step of being fired. By doing this, it may become possible to obtain the honeycomb unit having higher strength. When the honeycomb unit becomes to have higher strength, the honeycomb structure having one or plural honeycomb units also becomes to have higher strength. Preferably, the ratio of the hydroxyl group content in the raw-material inorganic particles to the hydroxyl group content in the raw-material zeolite particles is large as much as possible. However, from a view point of easiness in forming the honeycomb unit, preferably, the ratio may be 100 times or less.

The hydroxyl group content may be represented by the number of hydroxyl groups per 1 $cm^3$ of the raw-material inorganic fibers or the raw-material zeolite particles. The hydroxyl group content may be measured based on the water quantification method for measuring oxide fine particles using thermal desorption spectroscopy (TDS). More specifically, sample particles are heated up to 1000 °C under high-vacuum of approximately $10^{-8}$ Pa to dehydrate the sample particles, and the water dehydrated from the sample particles at a temperature range from 550 °C to 900 °C is measured by using a quadrupole mass spectrometer.

In the honeycomb unit of the honeycomb structure according to the embodiment of the present invention, preferably, the average particle diameter of the secondary particles of the inorganic particles other than zeolite particles used as raw material is equal to or less than the average particle diameter of the secondary particles of zeolite. Particularly, the ratio of the average particle diameter of the inorganic particles other than zeolite particles to the average particle diameter of zeolite is in a range from 1/10 to 1/1. By doing this, the strength of the honeycomb unit may be enhanced due to the bonding power of the inorganic particles having smaller average particle diameters. Further, by using such inorganic particles, pored (air holes) formed due to the bonding between the secondary particles may become smaller. As a result, it may become possible to increase an amount of zeolite per unit volume, thereby improving the NOx conversion performance.

The inorganic particles (inorganic particles other than zeolite) content included in the honeycomb unit is preferably in a range from 3 mass% to 30 mass%, more preferably in a range 5 mass% to 20 mass%. If the inorganic particles (inorganic particles other than zeolite) content is less than 3 mass%, the strength is likely to be reduced. On the other hand, if the inorganic particles (inorganic particles other than zeolite) content is greater than 30 mass%, the zeolite content is relatively reduced, and the NOx conversion performance is likely to be reduced.

(Inorganic binder)

The inorganic binder may be, but not limited to, inorganic sol, a clay binder, and the like. The inorganic sol includes alumina sol, silica sol, titania sol, sepiolite sol, attapulgite sol, and water glass. The clay binders include white clay, kaolin, montmorillonite, and double chain structural type clay such as sepiolite or attapulgite. Any of inorganic sol and a clay binder alone or combination thereof after being mixed may be used. An amount of inorganic binder as the solid content included in the honeycomb unit is preferably equal to or less than 30 mass%, more preferably in a range from 5 mass% to 30 mass%, and further more preferably in a range from 10 mass% to 20 mass%. If the inorganic binder content is other than the above range, it may become difficult to form the honeycomb unit having a desired shape.

(Inorganic fibers)

Inorganic fibers may be included in the honeycomb unit of the honeycomb structure according to an embodiment of the present invention. The inorganic fibers included in the honeycomb unit may be, but not limited to, one or more inorganic fibers selected from a group including alumina fibers, silica fibers, silicon carbide fibers, silica-alumina fibers, glass fibers, potassium titanate fibers, and aluminum borate fibers. Those inorganic fibers may be mixed with zeolite and inorganic binder when they are raw materials before the honeycomb unit is molded and fired. By doing this, the inorganic fibers as well as the inorganic particles and zeolite may form a fiber-reinforced fired body, which may improve the strength of the honeycomb unit.

The inorganic fibers herein are inorganic material having a larger aspect ratio (ratio of fiber length to fiber diameter) and play an effective role to improve bending strength of the honeycomb unit. The aspect ratio of the inorganic fibers is preferably in a range from 2 to 1000, more preferably in a range from 5 to 800, and further more preferably in a range from 10 to 500. If the aspect ratio of the inorganic fibers is less than 2, the contribution to the improvement of the strength of the honeycomb unit is small. On the other hand, if the aspect ratio is greater than 1000, clogging is more likely to occur in a die for molding during a molding step and it may become difficult to form the honeycomb unit having a desired shape. Further, the inorganic fibers may be folded during a molding step such as an extrusion molding of the honeycomb unit. As a result, the length of the fibers varies, which may reduce the strength of the honeycomb unit. When there is a distribution range of the aspect ratio, the average aspect ratio may be used.

The inorganic fibers content included in the honeycomb unit is preferably in a range from 3 mass% to 50 mass%, more preferably 3 mass% to 30 mass%, and further more preferably in a range from 5 mass% to 20 mass%. If the inorganic fibers content is less than 3 mass%, the strength of the honeycomb unit may be reduced. On the other hand, if the inorganic fibers content is greater than 50 mass%, an amount of zeolite that contributes to the NOx conversion is relatively reduced, and the NOx conversion performance may be reduced.

(Catalyst component)

The cell walls of the honeycomb unit of the honeycomb structure according to an embodiment of the present invention may support more catalyst component. The catalyst component may be, but not limited to, a noble metal, an alkali-metal compound, alkali-earth metal compound, and the like. The noble metal catalyst may be, for example, one or more noble metals selected from a group including platinum, palladium, rhodium, and the like. The alkali-metal compound may be, for example, one or more compounds selected from a group including potassium, sodium, and the like. The alkali-earth metal may be, for example, a compound of barium and the like.

The obtained honeycomb structure may be used as, but not limited to, so-called SCR catalyst (NOx conversion catalyst), three-way catalyst, and NOx adsorber catalyst for converting exhaust gas of diesel vehicles. A step of supporting the catalyst component may be performed, but not limited to, after the honeycomb unit or honeycomb structure are formed or when raw-materials are still ceramic particles. A method of supporting the catalyst component may be, but not limited to, an impregnation method or the like.

(Honeycomb structure)

In the honeycomb structure according to an embodiment of the present invention, a shape of a surface arranged orthogonal to the longitudinal direction of the cells of the honeycomb unit (hereinafter simplified as a cross-section surface) may be a square, a rectangle, a hexagon, fan-shaped, and the like.

FIGS. 1A and 1B show examples of the honeycomb structure according to embodiments of the present invention. In FIGS. 1A and 1B, the honeycomb unit 2 includes plural cells (through holes) 3 extending from the lower left-hand side to the upper right-hand side. The thickness of the cell walls 4 separating the cells 3 is preferably, but not limited to, in a range from 0.10 mm to 0.40 mm, more preferably in a range from 0.15 mm to 0.35 mm, and further more preferably in a range from 0.20 mm to 0.30 mm. If the thickness of the cell walls 4 is less than 0.10 mm, the strength of the honeycomb unit may be reduced. On the other hand, if the thickness of the cell walls 4 is greater than 0.40 mm, it may become difficult for exhaust gas to sufficiently penetrate into the cell walls 4, thereby making it difficult to effectively use the honeycomb unit for the purpose of NOx conversion, and as a result, the conversion performance may be reduced. Further, the number of cells per unit cross-section area of the honeycomb unit is preferably in a range from 15.5 to 93 cells/cm$^2$ (100 to 600 cpsi), more preferably in a range from 31 to 77.5 cells/cm$^2$ (200 to 500 cpsi), and further more preferably in a range from 46.5 to 62 cells/cm$^2$ (300 to 400 cpsi). If the number of cells is less than 15.5 cells/cm$^2$, an area of walls in contact with exhaust gas in the honeycomb unit may become too small. On the other hand, if the number of cells is greater than 93 cells/cm$^2$, a pressure loss may become too high and it may become difficult to form the honeycomb unit as it is desired.

The shape of the cross-section area of the cells 3 formed in the honeycomb unit is not limited. FIG. 2 shows a case where the shape of the cross-section area of the cells 3 is square. However, for example, the shape of the cross-section area of the cells 3 may be substantially a triangle or hexagon. By doing this, it may become possible to improve the strength of the porous honeycomb unit without reducing the pressure loss and the conversion performance, thereby improving the strength (for example, isostatic strength) of the honeycomb structure 1 as shown in FIGS 1A and 1B.

(Manufacturing of the honeycomb unit)

An exemplary manufacturing method of the honeycomb unit of the honeycomb structure according to the above mentioned embodiment of the present invention is described. First, a raw-material paste including the above-mentioned zeolite, inorganic particles, and inorganic binder as major components is prepared, and a honeycomb unit molded body is formed from the raw-material paste by, for example, extrusion molding. In addition, the above-mentioned inorganic fibers, organic binder, dispersion medium, molding aid, and the like may be adaptively added to the raw-material paste. The organic binder may be, but not limited to, one or more organic binder selected from a group including methylcellulose, carboxymethylcellulose, hydroxyethylcellulose, polyethyleneglycol phenol resin, epoxy resin, and the like. A blending amount of the inorganic binder is preferably in a range from 1 to 10 parts by mass with respect to 100 parts by mass in total of the solid content of the entire raw-material paste. The dispersion medium may be, but not limited to, water, organic solvent such as toluene, alcohol such as methanol, and the like. The molding aid may be, but not limited to, ethylene glycol, dextrin, fatty acid soap, polyalcohol, and the like.

Preferably, the raw-material paste may be, but not limited to, mixed and kneaded. For example, the raw-material paste may be mixed by using an apparatus such as a mixer and an attritor. Further, the raw-material paste may be well kneaded by using an apparatus such as a kneader. Preferably, a method of preparing the raw-material paste may be, but not limited to, a method of forming a shape having through holes by extrusion molding, or the like.

Next, the obtained honeycomb unit molded body is dried. The drying apparatus for drying may be, but not limited to, a microwave drying apparatus, a hot air drying apparatus, a dielectric drying apparatus, a reduced pressure drying apparatus, a vacuum drying apparatus, a freeze drying apparatus, and the like. Preferably, the obtained molded body is degreased. The degreasing conditions are not limited to, but are to be adaptively selected depending on a kind and an amount of an organic substance included in the molded body. Preferably, the molded body is degreased at a temperature of 400 °C for about two hours. Further, the dried and degreased honeycomb unit molded body is fired. The firing conditions is not limited to, but preferably at about two hours in a range from 600 °C to 1200 °C, and more preferably at about two hours in a range from 600 °C to 1000 °C. If the firing temperature is less than 600 °C, firing may not be sufficiently proceeded and the strength of the honeycomb unit may not be sufficiently increased. On the other hand, if the firing temperature is greater than 1200 °C, zeolite crystal may collapse and a porous honeycomb unit may not be manufactured due to too much firing.

(Manufacturing of honeycomb structure)

Next, a method of manufacturing the honeycomb structure including plural honeycomb units is described. An adhesive material is applied to side surfaces of the thus-obtained honeycomb units, so that the honeycomb units are bonded to each other one by one to form a honeycomb unit bonded body. Then the obtained honeycomb unit bonded body is dried and solidified so that the honeycomb unit bonded body has a desired size. Then the side surfaces of the honeycomb unit bonded body are cut to have a desired shape.

The adhesive material may be, but not limited to, a mixture of inorganic binder and ceramic particles, a mixture of inorganic binder and inorganic fibers, a mixture of inorganic binder, ceramic fibers, inorganic particles, and the like. Further, organic binder may be added to the adhesive material. The organic binder may be, but not limited to, one or more organic binder selected from a group including polyvinyl alcohol (PVA), methylcellulose (MC), ethylcellulose (EC), carboxymethylcellulose (CMC), and the like.

Preferably, the thickness of the layer of the adhesive material (adhesive material layer) for bonding the plural honeycomb units is in a range from 0.5 mm to 2 mm. The number of honeycomb units to be bonded to each other may be adaptively determined according to a size of honeycomb structure used as the honeycomb catalyst. Further, the honeycomb unit bonded body formed by bonding honeycomb units with the adhesive material may be adaptively cut and polished according to the shape of the honeycomb structure to be formed.

Next, a coating material is applied to the outer peripheral surface on which no opening of the through holes of the honeycomb structure is formed. Then the coating material is dried and solidified to form a coating material layer. By doing this, it may become possible to protect the outer peripheral surface of the honeycomb structure and increase the strength of the honeycomb structure. The coating material is not limited to and may be the same as or different from the adhesive material. Further, the compounding ratio in the coating material may be the same as or different from that in the adhesive material. The thickness of the layer of the coating material (coating material layer) is not limited to, but is preferably in a range from 0.1 mm to 3 mm. The coating material layer may be or may not be formed.

After the plural honeycomb units are bonded to each other by interposing the adhesive material, it is preferable to heat the plural honeycomb units. When the coating material layer is formed, it is preferable to heat the plural honeycomb units after the adhesive material layer and the coating material layer are formed. In such a case where the adhesive material layer and the coating material layer include organic binder, the organic binder may be degreased and eliminated in this heating process. The heating conditions may be adaptively determined according to a kind and an amount of an included organic substance. Preferably, the heating may be performed at a temperature of about 700 °C for about two hours.

FIG. 1A is a schematic diagram showing an example of the honeycomb structure 1 having a cylindrical shape, the honeycomb structure including plural honeycomb units that are bonded to each other and that have a rectangular pillar shape and a square-shaped cross-section surface. In this honeycomb structure 1, the honeycomb units 2 are bonded to each other by interposing the adhesive material 5, the outer peripheral part is cut so that the honeycomb structure 1 have a cylindrical shape, and the coating material layer 6 is formed. However, the present invention is not limited to this configuration. For example, the honeycomb units 2 may be formed so as to have a fan-shaped or a square-shaped cross-section surface, and those honeycomb units are bonded to each other so that the honeycomb structure has a desired shape without performing the cutting and polishing processes.

Next, a method of manufacturing the honeycomb structure including a single honeycomb unit is described. The honeycomb unit is formed so as to have a cylindrical shape in the same manner as described above in which the honeycomb structure having plural honeycomb units is formed, and the coating material layer is formed on the outer peripheral part of the honeycomb unit. By doing this, the honeycomb structure 1 having a single honeycomb unit 2 may be manufactured.

(Examples)

In the following, the honeycomb structures according to examples of the present invention manufactured under various conditions are described. However, the present invention is not limited to those examples.

(Example 1)

Manufacturing the honeycomb units

First, 2250 parts by mass of zeolite particles (hydroxyl group content: $10.7 \times 10^{19}$ units/cm$^3$, average particle diameter: 2 $\mu$m (herein, the average particle diameter refers to the average particle diameter of the secondary particles)), 250 parts by mass of $\gamma$-alumina particles (hydroxyl group content: $1.63 \times 10^{20}$ units/cm$^3$, average particle diameter: 0.5 $\mu$ m), 680 parts by mass of alumina fibers (average fiber diameter: 6 $\mu$m, average fiber length: 100 $\mu$m), 2600 parts by mass of alumina sol (solid concentration: 30 mass%), and 320 parts by mass of methylcellulose as organic binder are added to each other and mixed. Then, while a small amount of a plasticizing agent, a surface-activating agent, and a lubricant agent are added to the mixture and water is added to adjust the viscosity of the paste, the mixture is mixed and kneaded to obtain a mixed composition for forming the honeycomb unit. Then, the mixed composition is extrusion molded by using an extrusion molding apparatus to obtain a raw honeycomb molded body.

The obtained raw honeycomb molded body is fully dried by using a microwave drying apparatus and a hot air drying apparatus, then degreased at a temperature of 400 °C for two hours, and then fired at a temperature of 700 °C for two hours to obtain a honeycomb unit having a rectangular pillar shape (cross section 35 mm $\times$ 35 mm $\times$ length 150 mm), a cell density of 93 units/cm$^2$, a wall thickness of 0.2 mm, and a cell shape of a quadrangle (square).

Table 1 collectively shows the data of the hydroxyl group content, average particle diameter, compounding amount of the zeolite particles and the alumina particles (inorganic particles) used when the honeycomb units are manufactured, a ratio of the hydroxyl group content of alumina particles (inorganic particles) to the hydroxyl group content of zeolite particles, and bending strength of the honeycomb unit based on the three points bending test results.

Table 1

| | ZEOLITE | | | INORGANIC PARTICLES | | | | HYDROXYL GROUP IN INORGANIC PARTICLES/ HYDROXYL GROUP IN ZEOLITE | EVALUATION |
| | COMPOUNDING AMOUNT (PART BY WEIGHT) | HYDROXYL GROUP (UNITS/cm$^3$) | AVERAGE PARTICLE DIAMETER ($\mu$m) | KIND | COMPOUNDING AMOUNT (PART BY WEIGHT) | HYDROXYL GROUP (UNITS/cm$^3$) | AVERAGE PARTICLE DIAMETER ($\mu$m) | | BENDING STRENGTH (MPa) |
|---|---|---|---|---|---|---|---|---|---|
| EXAMPLE 1 | 2250 | 1.07*E+19 | 2 | ALUMINA | 250 | 1.63*E+20 | 0.5 | 15.2 | 11.3 |
| EXAMPLE 2 | 2000 | 1.07*E+19 | 2 | ALUMINA | 500 | 1.63*E+20 | 0.5 | 15.2 | 11.8 |
| EXAMPLE 3 | 1700 | 1.07*E+19 | 2 | ALUMINA | 800 | 1.63*E+20 | 0.5 | 15.2 | 12.7 |
| EXAMPLE 4 | 2000 | 1.07*E+19 | 2 | BOEHMITE | 500 | 3.65*E+20 | - | 34.1 | 12.5 |
| EXAMPLE 5 | 2000 | 1.07*E+19 | 2 | SILICA | 500 | 8.42*E+19 | 0.5 | 7.9 | 10.9 |
| EXAMPLE 6 | 2000 | 6.12*E+19 | 2 | ALUMINA | 500 | 1.63*E+20 | 0.5 | 2.7 | 10.7 |
| EXAMPLE 7 | 2000 | 6.54*E+18 | 10 | ALUMINA | 500 | 1.63*E+20 | 0.5 | 24.9 | 11.2 |
| EXAMPLE 8 | 2000 | 1.07*E+19 | 2 | ALUMINA | 500 | 6.54*E+19 | 2.0 | 6.1 | 10.2 |
| COMPARATIVE EXAMPLE 1 | 2500 | 1.07*E+19 | 2 | - | - | - | - | - | 6.2 |
| COMPARATIVE EXAMPLE 2 | 2000 | 6.12*E+19 | 2 | ALUMINA | 500 | 2.85*E+19 | 2.0 | 0.5 | 6.8 |

The hydroxyl group contents of zeolite particles and alumina particles are measured based on the water quantification method for measuring oxide fine particles by using a thermal desorption spectroscopy (TDS) measuring instrument TPD type (RIGAKU. K.K.). More specifically, in this analysis and testing method, a sample is placed on a SiC sample table and heated under the following conditions by radiating infrared light from the lower side while the sample is on a quartz stage in a high vacuum chamber having a pressure of the order of 10 to 8 Pa. Then, the gas desorbed from the sample under the conditions is directly measured by a quadrupole mass spectrometer. After five minutes of waiting time from when the sample is placed in the high-vacuum chamber so that the pressure in the chamber becomes stable, this measurement starts. The heating conditions are such that the temperature is increased from the room temperature up to 1000 °C at a rate of 1 °C/second. The measurement conditions of the mass spectrometer are as follows: measurement method: MID, measurement mass measurement: m/z 18, measurement ionizing method: electron-impact ionization method, and ionizing voltage: 70 eV.

The three points bending test with respect to the honeycomb units are performed in compliance with JIS (Japanese Industrial Standard)-R1601. As a measurement instrument, an Instron 5582 is used. A braking load W is vertically applied to the cell wall under the conditions that span L: 135 mm, crosshead speed: 1 mm/min. The bending strength σ is calculated by the following formula 1.

$$\sigma = WL/4Z \qquad\qquad (1)$$

Where area moment of inertia Z is calculated in advance by cancelling the moment of the hollow parts of the cells.

(Manufacturing the honeycomb structure)

An adhesive material paste is applied to the side surfaces of the honeycomb units so that the thickness of the adhesive material layer is 1 mm, and the honeycomb bonded body having four bonded units wide and four bonded units deep (total 16 honeycomb units) is formed. The adhesive material paste is formed by mixing 26 mass% of γ-alumina particles (average particle diameter: 2 $\mu$m), 37 mass% of alumina fibers (average fiber diameter: 10 $\mu$m, average fiber length: 100 $\mu$m), 31.5 mass% of alumina sol (solid concentration: 20 mass%), 0.5 mass% of carboxymethylcellulose, and 5 mass% of water. The side walls of the obtained honeycomb bonded body having a substantially rectangular pillar shape is cut by using a diamond cutter so that the shape of the honeycomb bonded body becomes a cylindrical shape. Then, as a paste, the coating material (same as the adhesive material) is applied to the outer surface of the side wall parts of the cylindrical shape honeycomb bonded body so that the thickness of the above-mentioned adhesive material paste layer is 0.5 mm to form the honeycomb bonded body having the cylindrical shape which is substantially the same shape of the honeycomb structure 1 shown in FIG. 1A. This honeycomb bonded body having the cylindrical shape is dried at a temperature of 120 °C and then the adhesive material layer and the paste of an outer wall are degreased by heating at a temperature of 700 °C for two hours to obtain the honeycomb structure having a cylindrical shape (diameter: 138 mm, height: 150 mm).

(Examples 2-8 and Comparative Examples 1,2)

(Manufacturing of honeycomb units)

Honeycomb units according to examples 2 through 8 and comparative example 1 and 2 are respectively manufactuired in the same manner as described in above example 1 except that the data (conditions) of the compounding amount the hydroxyl group content, and the average particle diameter, of the raw-material zeolite particles and the raw-material alumina particles (inorganic particles) are changed as shown in Table 1. In comparative example 1, the honeycomb unit is manufactured without using inorganic particles. The bending strength of the honeycomb units (having the shape shown in FIG. 2) is measured in the same manner as described in the above example 1, and the results are shown in Table 1.

(Evaluation results)

As the results in Table 1 shows, each three points bending strength of the honeycomb units which are the basic unit of the corresponding honeycomb structures in examples 1 through 8 is more than 10 MPa, which means that the strength of the honeycomb structures using those honeycomb units according to the examples 1 through 8 is high. On the other hand, the three point bending strength of the honeycomb unit in comparative example 1 formed from zeolite, inorganic fibers, and inorganic binder (without inorganic particles other than zeolite) and the honeycomb unit in comparative example 2 in which the hydroxyl group content in zeolite particles is less than that in inorganic (alumina) particles is in the order of 6 MPa, which means that the strength of the honeycomb structures using those honeycomb units of the comparative examples 1 and 2 is not enough. For further comparison, in example 6, the hydroxyl group content in zeolite particles is the same as that in comparative example 2. However, as a result, the three point bending strength in the example 6 is more than 10 MPa. This is because the hydroxyl group content in inorganic (alumina) particles is greater than that in zeolite.

In the honeycomb structure according to an embodiment of the present invention, zeolite is distributed across the entire cell walls. Therefore, the entire cell walls may contribute to the NOx conversion. Further, the strength of the honeycomb structure according to an embodiment of the present invention is high. Therefore, the honeycomb structure may be robust against vibrations and used as a catalyst layer for vehicles. Particularly, the honeycomb structure according to an embodiment of the present invention may be optimally used as an NOx conversion catalyst for an SCR system (for example diesel exhaust gas conversion system using ammonia) requiring zeolite catalyst.

**Claims**

1.  A honeycomb structure (1) including a honeycomb unit (2) having a shape in which plural cells (3) are extending along the longitudinal direction from one end face of the honeycomb unit (2) to the another end face, the cells (3) being separated from each other by cell walls (4), the honeycomb unit (2) comprising:

    zeolite;
    inorganic particles; and
    inorganic binder, the honeycomb unit (2)
    **characterized by**:

        a hydroxyl group content in the inorganic particles is greater than a hydroxyl group content in the zeolite.

2.  The honeycomb structure (1) according to claim 1, wherein
    the hydroxyl group content in the inorganic particles per unit volume is 2.5 times or more higher than the hydroxyl group content in the zeolite per the unit volume.

3.  The honeycomb structure (1) according to claim 1 or 2, wherein
    the inorganic particles include at least one compound of alumina, silica, titania, zirconia, ceria, mullite, and a precursor of one of the compounds.

4.  The honeycomb structure (1) according to any one of claims 1 through 3, the honeycomb unit (2) further comprising:

    inorganic fibers.

5.  The honeycomb structure (1) according to any one of claims 1 through 4, wherein
    the inorganic fibers includes at least one of alumina fibers, silica fibers, silicon carbide fibers, silica-alumina fibers, glass fibers, potassium titanate fibers, and aluminum borate fibers.

6.  The honeycomb structure (1) according to any one of claims 1 through 5, wherein
    the inorganic binder includes at least one of alumina sol, silica sol, titania sol, water glass, sepiolite, and attapulgite.

7.  The honeycomb structure (1) according to any one of claims 1 through 6, wherein
    the zeolite includes secondary particles, and the average particle diameter of the secondary particles of the zeolite is in a range from 0.5 $\mu$m to 10 $\mu$m.

8.  The honeycomb structure (1) according to any one of claims 1 through 7, wherein
    an average particle diameter of secondary particles of the inorganic particles is equal to or less than an average particle diameter of the zeolite.

9.  The honeycomb structure (1) according to any one of claims 1 through 8, wherein
    a content of the zeolite is in a range from 40 mass% to 80 mass%.

**10.** The honeycomb structure (1) according to any one of claims 1 through 9, wherein a content of the inorganic particles is in a range from 3 mass% to 30 mass%.

**11.** The honeycomb structure (1) according to any one of claims 1 through 10, wherein the zeolite is ion-exchanged by at least one of metal species selected from a group consisting of Cu, Fe, Ni, Zn, Mn, Co, Ag, and V.

**12.** The honeycomb structure (1) according to any one of claims 1 through 11, wherein a catalyst component is supported on the cell walls.

**13.** The honeycomb structure (1) according to claim 12, wherein the catalyst component includes at least one of a noble metal, an alkali-metal compound, and an alkali-earth metal compound.

**14.** The honeycomb structure (1) according to any one of claims 1 through 13, wherein plural honeycomb units are bonded to each other by interposing adhesive material.

## FIG.1A

## FIG.1B

# FIG.2

**EP 2 130 601 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005063653 A